# FASCICULE DE BREVET EUROPEEN

(11) **EP 1 795 373 B1**
(45) Date de publication et mention de la délivrance du brevet: **13.03.2013**
(21) Numéro de dépôt: 06124724.3
(22) Date de dépôt: 24.11.2006
(51) Int. Cl.: B60C 11/04

(54) **Bande de roulement pour pneumatique poids lourd.**
Lauffläche für einen Lastkraftwagen
Tire tread for heavy duty vehicle

(30) Priorité: 06.12.2005 FR 0512547
(43) Date de publication de la demande: 13.06.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Durand, Renaud, 63000 Clermont-Ferrand (FR)
(74) Mandataire: Diernaz, Christian

(56) Documents cités:
- EP-A- 0 841 199
- US-B1- 6 415 834
- PATENT ABSTRACTS OF JAPAN vol. 2003, no. 08, 6 août 2003 (2003-08-06) -& JP 2003 118320 A (SUMITOMO RUBBER IND LTD), 23 avril 2003 (2003-04-23)
- PATENT ABSTRACTS OF JAPAN vol. 2003, no. 12, 5 décembre 2003 (2003-12-05) -& JP 2005 280457 A (SUMITOMO RUBBER IND LTD), 13 octobre 2005 (2005-10-13)
- PATENT ABSTRACTS OF JAPAN vol. 2000, no. 01, 31 janvier 2000 (2000-01-31) -& JP 11 278016 A (SUMITOMO RUBBER IND LTD), 12 octobre 1999 (1999-10-12)

## Description

La présente invention se rapporte aux pneumatiques ayant une surface de roulement destinée à venir en contact avec la chaussée, cette surface de roulement étant pourvue de rainures principales, de rainures secondaires longitudinales et de creux transversaux pour former une sculpture dont les dimensions relatives sont données.

Un tel pneumatique, correspondant au préamble de la revendication 1, est connu du document JP-2003 118320.

Plus spécifiquement la présente invention se rapporte à des pneumatiques pour véhicules poids lourd destinés à des usages hivernaux sur des routes enneigées et présentant également des performances satisfaisantes sur routes normales.

Dans des pneumatiques poids lourd destinés à des usages hivernaux sur routes enneigées, il est connu de former sur la bande de roulement desdits pneumatiques des sculptures dont les rainures et incisions présentent des profondeurs supérieures à ce qui se trouve être réalisé pour des pneumatiques d'usage sur routes non enneigées (pneumatiques pour usage été par exemple).

Par la formation de grand nombre de rainures de grande profondeur et d'incisions en grand nombre et de même profondeur, on obtient en général un pneumatique dont la bande de roulement présente des diminutions de rigidités structurelles qui réduisent très sensiblement les gains apportées par la présence même de ces rainures et incisions sur la neige. Ces insuffisances se retrouvent particulièrement dans des conditions hivernales et en particulier en démarrage sur une pente enneigée et en configuration de virage sur neige et/ou glace.

L'objectif de l'invention est de répondre au besoin d'une règle de conception d'une sculpture pour bande de roulement de pneumatique équipant un véhicule poids lourd destiné à rouler sur des routes au moins partiellement enneigées et ne présentant pas les inconvénients des sculptures hivernales usuelles.

Bien entendu, une telle règle de conception intègre le fait que la sculpture doit être performante sur neige pendant une grande partie de son usage, c'est-à-dire jusqu'à environ la moitié de l'usure de la bande de roulement.

Définitions :
- Plan équatorial : plan perpendiculaire à l'axe de rotation du pneumatique et divisant le pneumatique en deux moitiés sensiblement égales.
- Plan méridien : plan contenant l'axe de rotation du pneumatique.
- Direction radiale : direction perpendiculaire à l'axe de rotation.
- Direction transversale ou axiale : direction parallèle à l'axe de rotation.
- Direction circonférentielle ou longitudinale : direction perpendiculaire à un plan méridien et tangente à la surface de roulement de la bande de roulement d'un pneumatique.
- Pont de liaison dans une rainure : élément de matière compris entre les deux parois délimitant ladite rainure ayant pour fonction d'empêcher le rapprochement de ces parois.

L'invention propose une sculpture de bande de roulement pour pneumatique comprenant une surface externe formant une surface de roulement de largeur W et destinée à venir en contact avec la chaussée pendant le roulage. Cette sculpture est formée par des éléments de relief délimités par une pluralité de rainures d'orientation générale longitudinale (c'est-à-dire dans la direction circonférentielle sur le pneumatique) et transversale (c'est-à-dire axiale sur le pneumatique), les rainures d'orientation longitudinale comprenant des rainures principales de profondeur G et secondaires de profondeur G' inférieure à la profondeur G des rainures principales, cette sculpture comprenant une partie centrale et des bords axialement de part et d'autre de la partie centrale. La partie centrale, délimitée axialement par deux rainures d'orientation longitudinale, a une largeur comprise entre 0.25 et 0.5 fois la largeur W de la bande et est pourvue avec au moins une rainure principale d'orientation longitudinale et de profondeur moyenne G.

Chaque bord est pourvu avec au moins deux rainures d'orientation longitudinale ; la répartition des rainures longitudinales en allant du plan équatorial vers les bords est telle que les rainures principales et les rainures secondaires sont disposées en alternance. Chaque paire de rainures longitudinales délimite des nervures, ces dernières étant pourvues d'une pluralité de rainures transversales ayant une profondeur égale à la profondeur G des rainures principales.

Cette bande de roulement est caractérisée en ce que :
- la profondeur G' des rainures secondaires est comprise entre 0.4 et 0.6 fois la profondeur G des rainures principales
- les rainures transversales des nervures de la partie centrale comportent sur au plus la moitié de leur longueur un pont de liaison dont la surface radialement à l'extérieur est à une distance Hc de la surface de roulement comprise entre 0.4 et 0.8 fois la profondeur G des rainures principales ;
- les rainures transversales des nervures de chaque bord comportent sur au plus la moitié de leur longueur un pont de liaison empêchant la fermeture desdites rainures transversales, la surface radialement à l'extérieur est à une distance Hs de la surface de roulement au plus égale à 0.3 fois la profondeur G des rainures principales.

Préférentiellement, les ponts de liaison des rainures transversales d'une même nervure sont disposés de manière à ce que une de leurs faces latérales soit continue avec l'une des faces latérales de ladite nervure.

Dans une autre variante préférentielle, la bande de roulement pour pneumatique selon l'invention comprend pour au moins une nervure des ponts de liaison disposés de manière alternée, c'est-à-dire d'un côté de la nervure puis de l'autre côté de ladite nervure.

Avantageusement les rainures transversales sont inclinées et font un angle moyen au moins égal à 3 degrés et au plus égal à 15 degrés.

D'autres caractéristiques et avantages de l'invention ressortent de la description faite ci-après en référence aux dessins annexés qui montrent, à titre d'exemples non limitatifs, une forme de réalisation de l'objet de l'invention.

La figure 1 montre une vue partielle en plan de la surface de roulement d'une bande de roulement selon l'invention ;

La figure 2 montre une vue en coupe selon la ligne II-II prise sur la figure 1 et qui montre la bande de roulement dans son épaisseur ;

La figure 3 montre une autre vue en coupe selon la ligne III-III de la bande de roulement de la figure 1 ;

La figure 4 montre une variante d'une sculpture selon l'invention ;

Les figures 5A et 5B montrent des résultats de mesures pour des variantes de sculptures.

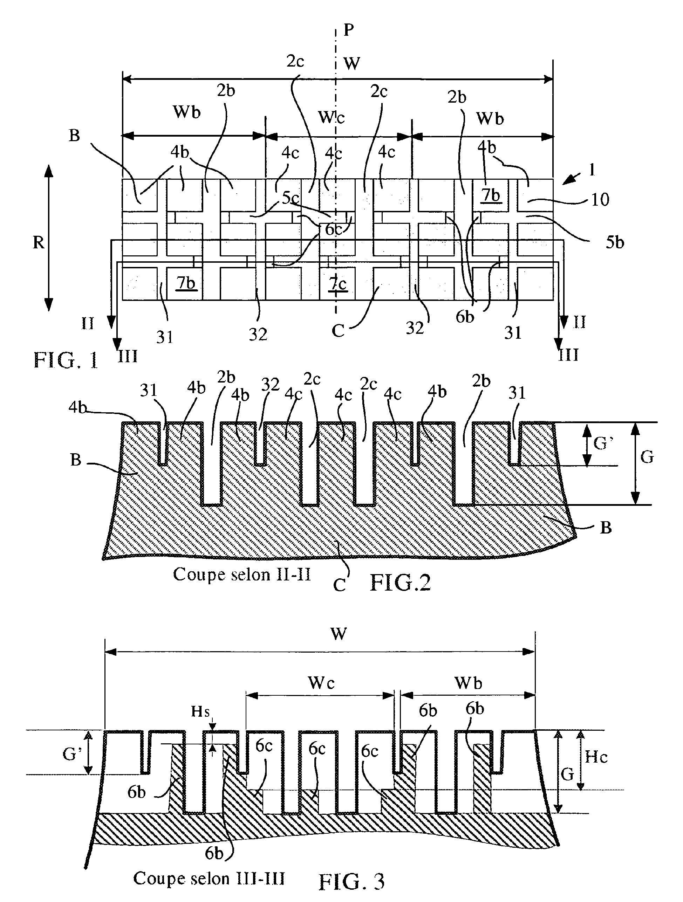

La figure 1 montre la surface de roulement 10 d'une sculpture d'une bande de roulement 1 selon l'invention d'un pneumatique de dimension 11 R 22.5. La largeur de cette bande de roulement, notée W, est ici égale à 240 mm. Cette sculpture comprend quatre rainures principales 2b, 2c d'orientation circonférentielle, dont la profondeur moyenne G est égale à 19 mm et dont la largeur moyenne est égale à 7 mm (mesurée sur le pneumatique neuf pourvu de ladite bande). La largeur W de la bande est mesurée comme la largeur de l'empreinte sur un sol plan d'un pneumatique monté sur sa jante nominale, soumis à ses conditions nominales d'usage (pression de gonflage et charge nominales) telles que définies dans la norme E.T.R.T.O..

Quatre rainures secondaires 31, 32 sont formées sur cette bande de roulement, les deux rainures 31 axialement les plus à l'extérieur ayant une largeur sensiblement égale à 2mm et les deux autres rainures 32 ayant une largeur sensiblement égale à 5 mm ; ces quatre rainures secondaires ont une profondeur G' égale à 11 mm.

Cette bande comprend une partie centrale C de largeur Wc comprise entre 25% et 50% de la largeur W de la bande de roulement et dans le cas présent égale à 80 mm (soit environ 33% de la largeur W). Cette partie centrale C est délimitée axialement par les deux rainures secondaires 32 axialement les plus à l'intérieur. Axialement à l'extérieur de la partie centrale C et de part et d'autre, on trouve des parties de bord B dans le cas présent de même largeur Wb. Les deux rainures secondaires 32 délimitant la partie centrale C délimitent axialement à l'intérieur lesdites parties de bord B.

La partie centrale comprend deux rainures principales circonférentielles 2c pour former sur cette partie centrale trois nervures 4c circonférentielles de largeur égale à 22 mm.

Chaque partie de bord B de la bande de roulement, comprend deux rainures circonférentielles, une rainure principale 2b et une rainure secondaire 31. La disposition des rainures circonférentielles, en partant du plan équatorial P et en allant vers l'un ou l'autre des bords de la bande de roulement, est telle que les rainures principales et secondaires se succèdent en alternance (dans cette alternance, la rainure secondaire 32 entre la partie centrale C et une partie de bord B est prise en compte). Les bords B comprennent chacun trois nervures 4b de largeur égale à 22 mm.

Sur chaque nervure 4c de la partie centrale C, il est formé une pluralité de rainures 5c d'orientation transversale comme cela est visible sur la figure 1 et de façon complémentaire sur les figures 2 et 3 montrant chacune des coupes de la figure 1. De même, chaque nervure 4b des bords B comprend une pluralité de rainures transversales 5b. Toutes les rainures transversales 5b, 5c sont dans le présent exemple formées sur les différentes nervures de manière à être dans un même plan radial (c'est-à-dire sans décalage entre elles dans le sens circonférentiel). Les rainures transversales ont une largeur égale à 7 mm.

Préférentiellement, les ponts (6b, 6c) sont disposés de manière à être sur une de leurs faces en continuité avec l'une des faces de la nervure sur laquelle ils sont formés.

La figure 2 montre une coupe de la bande de roulement représentée à la figure 1 selon un plan de coupe II-II. Sur cette figure 2, on voit que la partie centrale entre les deux rainures secondaires 32 axialement les plus proches l'une de l'autre et situées de part et d'autre du plan équatorial P comprend trois nervures 4c : la nervure centrée sur le plan équatorial P étant délimitée par deux rainures principales 2c de profondeur G, tandis que les deux autres nervures de la partie centrale C sont délimitées par une rainure principale 2c et une rainure secondaire 32.

De même, chaque partie de bord B de la bande de roulement est divisée en trois nervures 4b délimitées chacune par une rainure principale 2b et une rainure secondaire 31, 32 à l'exception de la nervure axialement la plus à l'extérieur. L'ensemble des rainures transversales 5b, 5c forment, respectivement, sur les nervures 4b, 4c des blocs 7b, 7c.

La figure 3 montre une coupe selon le plan de coupe III-III de la figure 1. On voit que les rainures transversales 5c de la partie centrale C de largeur égale à 22 mm ont une profondeur de 19 mm (égale à la profondeur des rainures longitudinales principales). Ces rainures comportent sur 45% (10 mm : 22 mm) de leur longueur un pont de liaison 6c rendant solidaire les blocs 7c de part et d'autre de ce pont. La surface radialement à l'extérieur des ponts de liaison 6c est située sous la surface de roulement 10 à une distance Hc comprise entre 0.4 et 0.8 fois la profondeur G des rainures principales et dans le cas présent égal à 11 mm de la surface de roulement à l'état neuf.

Sur les parties de bord B, les rainures transversales 5b sont disposées pour être alignées avec les rainures transversales 5c de la partie centrale C. Ces rainures transversales 5b des bords B présentent les mêmes caractéristiques géométriques de profondeur et de largeur que les rainures transversales 5c de la partie centrale ; elles comportent, sur au plus la moitié de leur longueur, un pont de liaison 6b empêchant la fermeture desdites rainures transversales 5b, la surface radialement à l'extérieur desdits ponts est à une distance Hs de la surface de roulement 10 au plus égale à 0.3 fois la profondeur G des rainures principales (dans le cas présent cette distance est égale à 1 mm).

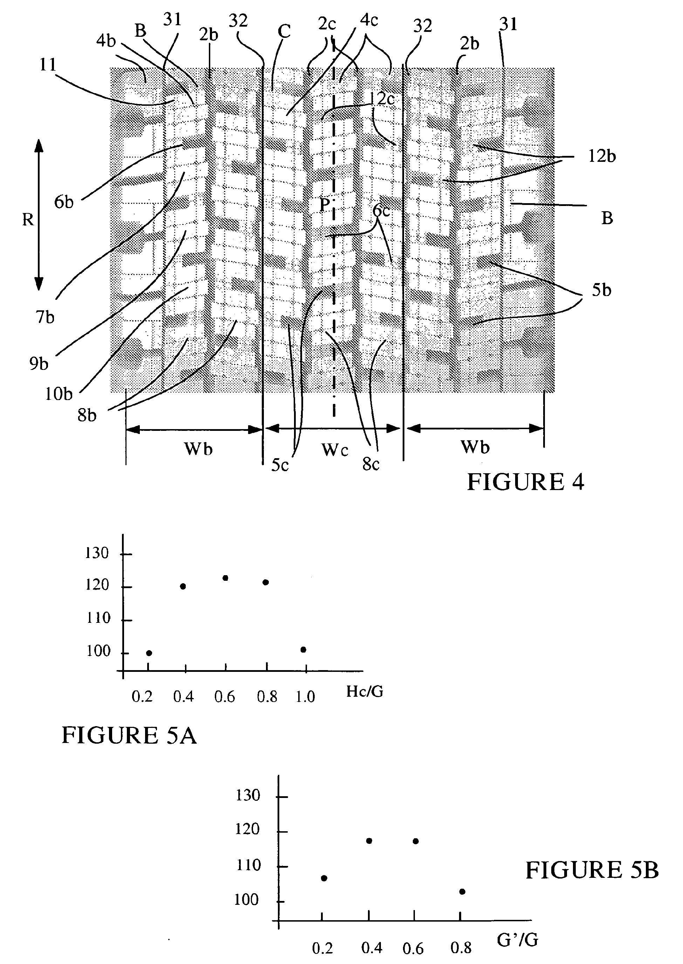

Dans la variante montrée avec la figure 4, on retrouve sensiblement les mêmes rainures principales 2b, 2c et secondaires 31, 32 que dans la première variante. Une première différence réside dans le fait que les rainures transversales 5b, 5c ne sont plus en coïncidence sur toutes les nervures 4b, 4c. Les rainures transversales de deux nervures adjacentes sont décalées dans le sens circonférentiel de manière à ne pas être dans un même plan de coupe méridien.

Par ailleurs, chaque rainure transversale 5b, 5c présente une inclinaison moyenne par rapport à la direction axiale (direction perpendiculaire à la direction de roulage figurée par la flèche R sur la figure 4) qui est différente de 0° et dans le cas présent égale à 15°. Les rainures transversales 5c d'une même nervure 4c ont une même orientation ; d'une nervure 4c à une autre nervure 4c, les orientations des rainures transversales 5c sont opposées. Sur les nervures des parties de bord B il en est de même à l'exception de la nervure axialement la plus à l'extérieur.

Enfin, chaque bloc 7b, 7c entre deux rainures transversales 5b, 5c, et à l'exception des nervures axialement les plus à l'extérieur, est pourvu avec deux incisions 8b, 8c dont les traces sur la surface de roulement 10 sont parallèles à la direction moyenne des rainures transversales 5b, 5c délimitant lesdits blocs 7b, 7c. Ces incisions 8b, 8c ont une profondeur de 11 mm (préférentiellement, la profondeur de ces incisions doit être au moins égale à 0.4 fois la profondeur G des rainures principales et au plus à 0.6 fois la même profondeur G). En outre, tous les blocs 7b, 7c sont pourvus de deux incisions 11 longitudinales coupant les incisions transversales 8b, 8c ; ces incisions longitudinales 11 ont une profondeur de 0.3 mm (préférentiellement au plus égale à 2% de la profondeur G des rainures principales 2b, 2c).

Par ailleurs, les incisions transversales 8b, 8c, sur un même bloc, délimitent une lamelle de matière dont les faces latérales sont axialement à l'extérieur des faces latérales des autres lamelles du même bloc.

Pour limiter la diminution de rigidité mécanique de la bande de roulement, les faces de matière délimitant les incisions 8b, 8c comprennent des motifs de relief pour permettre le blocage d'une face par rapport à l'autre. De cette manière, le nombre d'arêtes de matière en contact avec le sol dans l'aire de contact du pneumatique est augmenté tout en limitant la perte de rigidité des éléments de sculpture.

Enfin chaque pont de liaison 6b, 6c est pourvu avec une incision 12b, 12c sensiblement parallèle à la rainure transversale dans laquelle ledit pont est formé.

De manière avantageuse, cette bande de roulement pour pneumatique est telle que la distance entre deux rainures transversales 5b, 5c d'une même nervure 4b, 4c est au plus égale à trois fois la largeur moyenne de ladite nervure. Dans le cas présenté, la distance entre deux rainures transversales que ce soit sur les nervures du bord ou de la partie centrale est égale à 26 mm.

Le pneumatique décrit a fait l'objet de tests comparatifs avec un pneumatique de dimension semblable pourvu d'une sculpture hivernale usuelle (11 R 22.5 XDW ICE GRIP). Dans le test motricité sur neige, un véhicule poids lourd, équipé avec des pneumatiques à tester sur les essieux moteur et directeur, est à l'arrêt sur une route enneigée et dont la pente est comprise entre 0 et 5 %. Le test de motricité consiste à mesurer l'accélération longitudinale pour les différents pneumatiques testés (plus l'accélération est importante, meilleure est la performance). Les pneumatiques selon l'invention ont permis d'améliorer de 20 à 50% la performance des pneumatiques pris pour référence. La figure 5A montre les points de relevé de motricité (plus la valeur sur l'axe vertical du graphe représenté est importante et meilleure est la performance ; les écarts étant exprimés en pourcentage) pour des pneumatiques dont le rapport Hc/G varie entre 0.2 et 1.0. On constate que pour des valeurs de Hc/G comprises entre 0.4 et 0.8 le niveau de performance longitudinale est optimal.

Dans un autre test, on compare la performance "transversale" des pneumatiques. Dans ce but, on mesure la variation d'angle à donner au volant pour passer dans un virage de rayon donné ainsi que des corrections angulaires éventuelles (plus l'angle est petit, meilleure est la performance ; plus les corrections sont faibles, meilleure est la performance). Sur la figure 5B, on note que les pneumatiques de l'invention améliorent la performance transversale (plus la valeur sur l'axe vertical du graphe représenté est importante et meilleure est la performance) de l'ordre de 10% pour des pneumatiques dont le rapport G'/G varie entre 0.2 et 1.0.

## Revendications

1. Bande de roulement (1) pour pneumatique comprenant une surface externe (10) formant une surface de roulement de largeur (W) et destinée à venir en contact avec la chaussée pendant le roulage, cette bande comportant une sculpture formée par des éléments de relief délimités par une pluralité de rainures d'orientation générale longitudinale (2b, 2c, 31, 32) (circonférentielle sur le pneumatique) et transversale (5b, 5c) (ou axiale sur le pneumatique), les rainures d'orientation longitudinale comprenant des rainures principales (2b, 2c) de profondeur G et secondaires (31, 32) de profondeur G' inférieure à la profondeur G des rainures principales, cette sculpture comprenant une partie centrale (C) et des bords (B) axialement de part et d'autre de la partie centrale,
ladite partie centrale (C), délimitée axialement par deux rainures d'orientation longitudinale, et de largeur comprise entre 0.25 et 0.5 fois la largeur W de la bande étant pourvue avec au moins une rainure principale (2c) d'orientation longitudinale et de profondeur moyenne G,
chaque bord (B) étant pourvu avec au moins deux rainures d'orientation longitudinale
la répartition des rainures longitudinales en allant du plan équatorial vers les bords étant telle que les rainures principales (2b, 2c) et les rainures secondaires (31, 32) sont disposées en alternance,
chaque paire de rainures longitudinales délimitant des nervures pourvues d'une pluralité de rainures transversales (5b, 5c) de profondeur égale à la profondeur G des rainures principales,
cette bande de roulement étant **caractérisée en ce que**
• la profondeur G' des rainures secondaires (31, 32) est comprise entre 0.4 et 0.6 fois la profondeur G des rainures principales (2b, 2c)
• les rainures transversales (5c) des nervures de la partie centrale (C) comportent sur au plus la moitié de leur longueur un pont de liaison (6c) dont la surface radialement à l'extérieur est à une distance Hc de la surface de roulement comprise entre 0.4 et 0.8 fois la profondeur G des rainures principales ;
• les rainures transversales (5b) des nervures de chaque bord (B) comportent sur au plus la moitié de leur longueur un pont de liaison (6c) empêchant la fermeture desdites rainures transversales, la surface radialement à l'extérieur est à une distance Hs de la surface de roulement au plus égale à 0.3 fois la profondeur G des rainures principales.

2. Bande de roulement pour pneumatique selon la revendication 1 **caractérisée en ce que**, pour chaque nervure, les pontages (6b, 6c) sont disposés de manière à être sur une de leur face en continuité avec l'une des faces de ladite nervure.

3. Bande de roulement pour pneumatique selon la revendication 2 **caractérisée en ce que**, pour au moins une nervure, les pontages (6b, 6c) sont disposés de manière alternée.

4. Bande de roulement pour pneumatique selon l'une des revendications 1 à 3 **caractérisée en ce que** les rainures transversales (5b, 5c) sont inclinées par rapport à la direction axiale selon un angle au plus égal à 15 degrés.

5. Bande de roulement pour pneumatique selon l'une des revendications 1 à 4 **caractérisée en ce que** la distance séparant deux rainures transversales (5b, 5c) d'une même nervure est au plus égale à trois fois la largeur moyenne de ladite nervure.

6. Bande de roulement pour pneumatique selon la revendication 5 **caractérisée en ce que** chaque élément de sculpture (4b, 4c) délimité par des rainures longitudinales et des rainures transversales est pourvu avec au moins une incision (8b, 8c) d'orientation transversale débouchant dans les rainures longitudinales, ces incisions d'orientation transversale ayant une profondeur moyenne comprise entre 0.4 et 0.6 fois la profondeur G des rainures principales (2b, 2c).

## Claims

1. A tread (1) for tyres comprising an outer surface (10) forming a running surface of width (W) and intended to come into contact with the roadway during travel, this tread comprising a tread pattern formed by elements in relief defined by a plurality of grooves of longitudinal (2b, 2c, 31, 32) (circumferential on the tyre) and transverse (5b, 5c) (or axial on the tyre) general orientation, the grooves of longitudinal orientation comprising main grooves (2b, 2c) of depth G and secondary grooves (31, 32) of depth G' less than the depth G of the main grooves, this tread pattern comprising a central part (C) and edges (B) axially on either side of the central part,
said central part (C), defined axially by two grooves of longitudinal orientation, and of a width of between 0.25 and 0.5 times the width W of the tread, being provided with at least one main groove (2c) of longitudinal orientation and of average depth G,
each edge (B) being provided with at least two grooves of longitudinal orientation,
the distribution of the longitudinal grooves from the equatorial plane towards the edges being such that the main grooves (2b, 2c) and the secondary grooves (31, 32) are arranged alternately,
each pair of longitudinal grooves defining ribs provided with a plurality of transverse grooves (5b, 5c) of a depth equal to the depth G of the main grooves,
this tread being **characterised in that**
• the depth G' of the secondary grooves (31, 32) is of between 0.4 and 0.6 times the depth G of the main grooves (2b, 2c);
• the transverse grooves (5c) of the ribs of the central part (C) comprise over at most half of their length a connecting bridge (6c) the surface radially to the outside of which is at a distance Hc from the running surface of between 0.4 and 0.8 times the depth G of the main grooves;
• the transverse grooves (5b) of the ribs of each edge (B) comprise over at most half of their length a connecting bridge (6c) which prevents closure of said transverse grooves, the surface radially to the outside is at a distance Hs from the running surface which is at most equal to 0.3 times the depth G of the main grooves.

2. A tyre tread according to Claim 1, **characterised in that**, for each rib, the bridges (6b, 6c) are arranged so as to be, on one of their faces, in continuity with one of the faces of said rib.

3. A tyre tread according to Claim 2, **characterised in that**, for at least one rib, the bridges (6b, 6c) are arranged alternately.

4. A tyre tread according to one of Claims 1 to 3, **characterised in that** the transverse grooves (5b, 5c) are inclined relative to the axial direction at an angle at most equal to 15 degrees.

5. A tyre tread according to one of Claims 1 to 4, **characterised in that** the distance between two transverse grooves (5b, 5c) of one and the same rib is at most equal to three times the average width of said rib.

6. A tyre tread according to Claim 5, **characterised in that** each tread pattern element (4b, 4c) defined by longitudinal grooves and transverse grooves is provided with at least one incision (8b, 8c) of transverse orientation opening into the longitudinal grooves, these incisions of transverse orientation having an average depth of between 0.4 and 0.6 times the depth G of the main grooves (2b, 2c).

## Patentansprüche

1. Laufstreifen (1) für einen Luftreifen, der eine Außenfläche (10) enthält, die eine Lauffläche formt, die eine Breite (W) hat und dazu bestimmt ist, während des Rollens mit der Straße in Kontakt zu kommen, wobei dieser Streifen ein Profil aufweist, das von Reliefelementen geformt wird, die von einer Vielzahl von Rillen mit allgemeiner Längsausrichtung (2b, 2c, 31, 32) (Umfangsrichtung auf dem Luftreifen) und Querausrichtung (5b, 5c) (oder axialer Ausrichtung auf dem Luftreifen) begrenzt werden, wobei die Rillen mit Längsausrichtung Hauptrillen (2b, 2c) einer Tiefe G und Sekundärrillen (31, 32) einer Tiefe G' geringer als die Tiefe G der Hauptrillen enthalten, wobei dieses Profil einen zentralen Teil (C) und Ränder (B) axial zu beiden Seiten des zentralen Teils enthält,
wobei der zentrale Teil (C), der axial von zwei Rillen mit Längsausrichtung begrenzt wird und eine Breite hat, die zwischen dem 0,25-fachen und dem 0,5-fachen der Breite W des Streifens liegt, mit mindestens einer Hauptrille (2c) mit Längsausrichtung und mit einer mittleren Tiefe G ausgestattet ist,
wobei jeder Rand (B) mit mindestens zwei Rillen mit Längsausrichtung versehen ist,
wobei die Verteilung der Längsrillen von der Äquatorialebene zu den Rändern so ist, dass die Hauptrillen (2b, 2c) und die Sekundärrillen (31, 32) abwechselnd angeordnet sind,
wobei jedes Paar von Längsrillen Rippen begrenzt, die mit einer Vielzahl von Querrillen (5b, 5c) einer Tiefe gleich der Tiefe der Hauptrillen versehen sind,
wobei dieser Laufstreifen **dadurch gekennzeichnet ist, dass**
• die Tiefe G' der Sekundärrillen (31, 32) zwischen dem 0,4-fachen und dem 0,6-fachen der Tiefe G der Hauptrillen (2b, 2c) liegt,
• die Querrillen (5c) der Rippen des zentralen Teils (C) über höchstens die Hälfte ihrer Länge eine Verbindungsbrücke (6c) aufweisen, deren radial äußere Fläche einen Abstand Hc zur Lauffläche hat, der zwischen dem 0,4-fachen und dem 0,8-fachen der Tiefe G der Hauptrillen liegt;
• die Querrillen (5b) der Rippen jedes Rands (B) über höchstens die Hälfte ihrer Länge eine Verbindungsbrücke (6c) aufweisen, die das Schließen der Querrillen verhindert, wobei die radial äußere Fläche einen Abstand Hs zur Lauffläche höchstens gleich dem 0,3-fachen der Tiefe G der Hauptrillen hat.

2. Laufstreifen für Luftreifen nach Anspruch 1, **dadurch gekennzeichnet, dass** für jede Rippe die Überbrückungen (6b, 6c) so angeordnet sind, dass sie auf einer ihrer Seiten in Kontinuität mit einer der Seiten der Rippen sind.

3. Laufstreifen für Luftreifen nach Anspruch 2, **dadurch gekennzeichnet, dass** für mindestens eine Rippe die Überbrückungen (6b, 6c) abwechselnd angeordnet sind.

4. Laufstreifen für Luftreifen nach einem der Ansprüche 1 bis 3, **dadurch gekennzeichnet, dass** die Querrillen (5b, 5c) bezüglich der axialen Richtung gemäß einem Winkel höchstens gleich 15 Grad geneigt sind.

5. Laufstreifen für Luftreifen nach einem der Ansprüche 1 bis 4, **dadurch gekennzeichnet, dass** der zwei Querrillen (5b, 5c) einer gleichen Rippe trennende Abstand höchstens gleich dem Dreifachen der mittleren Breite der Rippe ist.

6. Laufstreifen für Luftreifen nach Anspruch 5, **dadurch gekennzeichnet, dass** jedes Profilelement (4b, 4c), das durch Längsrillen und durch Querrillen begrenzt wird, mit mindestens einem Einschnitt (8b, 8c) mit Querausrichtung versehen ist, der in die Längsrillen mündet, wobei diese Einschnitte mit Querausrichtung eine mittlere Tiefe haben, die zwischen dem 0,4-fachen und dem 0,6-fachen der Tiefe G der Hauptrillen (2b, 2c) liegt.
